(19) Europäisches Patentamt
European Patent Office
Office européen des brevets

(11) **EP 4 764 933 A1**

(12) **EUROPEAN PATENT APPLICATION**
published in accordance with Art. 153(4) EPC

(43) Date of publication:
**24.06.2026  Bulletin 2026/26**

(21) Application number: **25795022.0**

(22) Date of filing: **21.04.2025**

(51) International Patent Classification (IPC):
*G06F 30/20* (2020.01)       *G01R 31/385* (2019.01)
*G01R 19/08* (2006.01)       *G06F 119/08* (2020.01)

(52) Cooperative Patent Classification (CPC):
**G01R 19/08; G01R 31/385; G06F 30/20;**
G06F 2119/08; Y02E 60/10

(86) International application number:
**PCT/KR2025/005344**

(87) International publication number:
**WO 2025/225984 (30.10.2025 Gazette 2025/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.04.2024  KR 20240053355**

(71) Applicant: **LG Energy Solution, Ltd.**
**Seoul 07335 (KR)**

(72) Inventors:
• **HEO, Ha Young**
  **Daejeon 34122 (KR)**
• **KONG, Jin Hak**
  **Daejeon 34122 (KR)**
• **IM, Kyoung Su**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **HEAT GENERATION SIMULATION DEVICE AND OPERATING METHOD THEREOF**

(57)    A heat generation simulation device according to an embodiment disclosed herein may include an initial value setting unit configured to set an initial value including information regarding a battery and charge/discharge information, a model generation unit configured to generate a three-dimensional model of the battery, a heat flux identification unit configured to identify an internal heat flux of the battery using an electrochemical model based on the initial value, and an information generation unit configured to generate simulation information related to heat generation of the battery based on the heat flux.

FIG.1

**Description**

## TECHNICAL FIELD

### Cross-reference to Related Applications

This application claims priority from Korean Patent Application No. 10-2024-0053355, filed on April 22, 2024, the disclosure of which is incorporated by reference herein.

### Technical Field

Embodiments disclosed herein relate to a heat generation simulation device and a method for operating the same.

## BACKGROUND ART

In recent years, research and development for secondary batteries have been actively conducted. Here, the secondary battery is a battery capable of recharging and discharging, and in its meaning, includes all of the existing Ni/Cd battery, Ni/MH battery, and the like and a recent lithium-ion battery. Among secondary batteries, the lithium-ion battery has the advantage of a much higher energy density than the existing Ni/Cd battery, Ni/MH battery, and the like. In addition, since the lithium-ion battery may be manufactured to be small and lightweight, the lithium-ion battery is used as a power source for mobile devices, and in recent years, its scope of use has expanded to include power sources for electric vehicles, so that the lithium-ion battery attracts attention as a next-generation energy storage medium.

As the industrial fields utilizing batteries expand, a battery management system (BMS) that diagnoses the safety of batteries is also developing. The BMS may diagnose the performance of a battery utilizing various diagnostic algorithms and perform appropriate control based on the state of the battery. The BMS may detect the heat and temperature of the battery and perform corresponding control using one of the diagnostic algorithms. Accordingly, the BMS may perform appropriate control according to the heat and temperature of the battery to prevent damage to the battery itself, reduced lifespan, and fire caused by heat generation.

In order to accurately calculate the heat and temperature of a battery, there is a simulation method using software that may monitor the electrochemical reaction inside the battery as well as an experiment method that actually operates the battery. For example, by using an electrochemical model for the battery, chemical reactions occurring inside the battery may be monitored, and simulations may be performed in a virtual environment similar to the actual battery operating environment, thereby saving experimental time and cost.

## DISCLOSURE OF THE INVENTION

### TECHNICAL PROBLEM

In general, a battery management system (BMS) may sense the temperature outside a battery and perform corresponding control. However, there is a problem in that the amount of generated heat and the temperature distribution inside the battery may not be determined.

The main cause of heat generation inside the battery is electrochemical reactions and Joule heat caused by electric current, but there is a problem that the battery must be disassembled to detect the heat and temperature inside the battery.

The technical aspects addressed by the embodiments disclosed herein are not limited to those mentioned above, and other technical aspects not mentioned will be clearly understood by those skilled in the art from the following descriptions.

### TECHNICAL SOLUTION

A heat generation simulation device according to an embodiment disclosed herein may include an initial value setting unit configured to set an initial value including information regarding a battery and charge/discharge information, a model generation unit configured to generate a three-dimensional model of the battery, a heat flux identification unit configured to identify an internal heat flux of the battery using an electrochemical model based on the initial value, and an information generation unit configured to generate simulation information related to heat generation of the battery based on the heat flux.

In an embodiment, the heat flux identification unit may divide the three-dimensional model into sub-models of specified volume units and identify a first heat flux in each of the sub-models.

In an embodiment, the information generation unit may generate first heat flux information by mapping the first heat flux in each of the sub-models to the three-dimensional model.

In an embodiment, the heat generation simulation device may further include a current density identification unit configured to identify a current density in a current collector of the battery, and the information generation unit may generate current density information based on the current density.

In an embodiment, the heat flux identification unit may identify a second heat flux in the current collector based on the current density.

In an embodiment, the information generation unit may generate second heat flux information by mapping the second heat flux in the current collector to the three-dimensional model.

In an embodiment, the information generation unit may generate heat distribution information inside the battery based on the heat flux.

In an embodiment, the heat generation simulation device may further include a temperature calculation unit configured to calculate a temperature based on the heat flux, and the information generation unit may generate temperature distribution information by mapping the temperature to the three-dimensional model.

In an embodiment, the model generation unit may map a two-dimensional model based on an internal shape of the battery and the three-dimensional model based on an Archimedean spiral trajectory.

An operating method for a heat generation simulation device according to an embodiment disclosed herein may include setting an initial value including information regarding a battery and charge/discharge information, generating a three-dimensional model of the battery, identifying an internal heat flux of the battery using an electrochemical model based on the initial value, and generating simulation information related to heat generation of the battery based on the heat flux.

In an embodiment, the identifying of the heat flux may include dividing the three-dimensional model into sub-models of specified volume units and identifying a first heat flux in each of the sub-models.

In an embodiment, the generating of the information may include generating first heat flux information by mapping the first heat flux in each of the sub-models to the three-dimensional model.

In an embodiment, the operating method may further include identifying a current density in a current collector of the battery, and the generating of the information may include generating current density information based on the current density.

In an embodiment, the identifying of the heat flux may include identifying a second heat flux in the current collector based on the current density.

In an embodiment, the generating of the information may include generating second heat flux information by mapping the second heat flux in the current collector to the three-dimensional model.

In an embodiment, the generating of the information may include generating heat distribution information inside the battery based on the heat flux.

In an embodiment, the operating method may further include calculating a temperature based on the heat flux, and the generating of the information may include generating temperature distribution information by mapping the temperature to the three-dimensional model.

In an embodiment, the generating of the model may include mapping a two-dimensional model based on an internal shape of the battery and the three-dimensional model based on an Archimedean spiral trajectory.

## ADVANTAGEOUS EFFECTS

A heat generation simulation device according to various embodiments disclosed herein can calculate the heat and temperature generated inside a battery by calculating the heat caused by an electrochemical reaction and the Joule heat caused by an electric current, which are the main causes of heat generation. Furthermore, through the aforementioned simulation, an optimal control algorithm capable of preventing battery damage due to heat generation can be obtained.

The effects of the heat generation simulation device and the method of operating the same according to the disclosure herein are not limited to the effects mentioned above, and other effects not mentioned will be clearly understood by those skilled in the art according to the disclosure herein.

## BRIEF DESCRIPTION OF THE DRAWINGS

FIG. 1 is a block diagram of a heat generation simulation system according to an embodiment disclosed herein.
FIG. 2 is a block diagram of a heat generation simulation device included in a battery management system (BMS) according to an embodiment disclosed herein.

FIG. 3 illustrates a two-dimensional model of positive and negative electrodes of a cylindrical battery according to an embodiment disclosed herein.

FIG. 4 illustrates an example of adiabatic conditions applied to a three-dimensional model of the cylindrical battery according to an embodiment disclosed herein.

FIG. 5 illustrates a computing system that executes the operation of the heat generation simulation device according to an embodiment disclosed herein.

FIGS. 6a and 6b illustrate a graphical user interface (GUI) implemented by the computing system that executes the operation of the heat generation simulation device according to an embodiment disclosed herein.

FIG. 7 illustrates temperature distribution information based on simulation results by the computing system according to an embodiment disclosed herein.

FIG. 8 is a flowchart showing a method of operating the heat generation simulation device according to an embodiment disclosed herein.

With respect to the description of the drawings, the same or similar reference signs may be used for the same or similar elements.

## MODE FOR CARRYING OUT THE INVENTION

Hereinafter, embodiments of the present invention will be described with reference to the accompanying drawings. However, this is not intended to limit the present invention to the specific embodiments, and it is to be construed to include various modifications, equivalents, and/or alternatives of embodiments of the present invention.

It should be appreciated that embodiments herein and the terms used therein are not intended to limit the technological features set forth herein to particular embodiments and include various changes, equivalents, or replacements for a corresponding embodiment. With regard to the description of the drawings, similar or related reference numerals may be used to refer to similar or related elements. It is to be understood that a singular form of a noun corresponding to an item may include one or more of the things, unless the relevant context clearly indicates otherwise.

As used herein, each of phrases such as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Terms such as "1st" and "2nd," "first," "second," "A." "B," "(a)," or "(b)" may be used to simply distinguish a corresponding component from another, and do not limit the components in other aspects (e.g., importance or order) unless specifically stated otherwise.

In the present specification, it is to be understood that if an element (e.g., a first element) is referred to, with or without the term "operatively" or "communicatively," as "connected to," "coupled to," or "in contact with" another element (e.g., a second element), it means that the element may be connected to the other element directly (e.g., by wire or wirelessly) or indirectly (e.g., via a third element).

A method according to various embodiments disclosed herein may be included and provided in a computer program product. The computer program product may be traded as a product between a seller and a buyer. The computer program product may be distributed in the form of a machine-readable storage medium (e.g., a compact disc read only memory and CD-ROM), or be distributed (e.g., downloaded or uploaded) online via an application store, or between two user devices directly. If distributed online, at least part of the computer program product may be temporarily generated or at least temporarily stored in the machine-readable storage medium, such as memory of the manufacturer's server, a server of the application store, or a relay server.

According to embodiments disclosed herein, each component (e.g., a module or a program) of the above-described components may include a single entity or multiple entities, and some of the plurality of entities may be disposed separately from other components. According to embodiments disclosed herein, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as those performed by a corresponding one of the plurality of components before the integration. According to embodiments disclosed herein, operations performed by the module, the program, or another component may be carried out sequentially, in parallel, repeatedly, or heuristically, or one or more of the operations may be executed in a different order or omitted, or one or more other operations may be added.

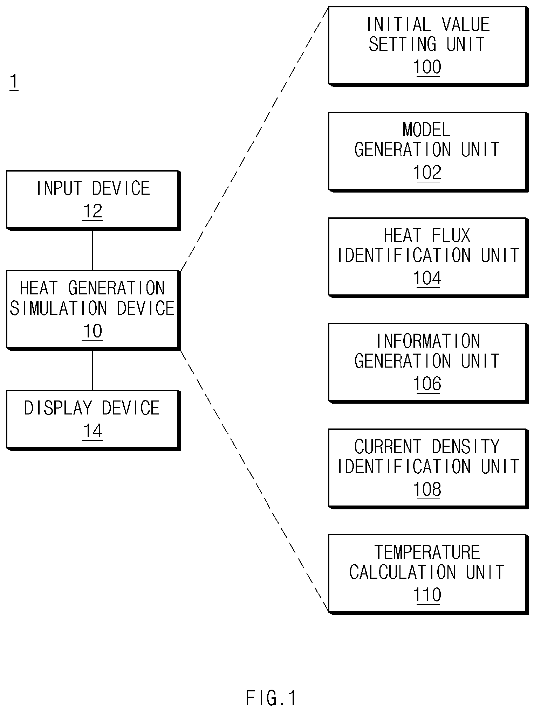

FIG. 1 is a block diagram of a heat generation simulation system according to an embodiment disclosed herein.

Referring to FIG. 1, a heat generation simulation system 1 may simulate a heat distribution and a temperature distribution inside a battery by identifying heat caused by a chemical reaction generated inside the battery and Joule heat due to current flow. By analyzing the heat distribution and temperature distribution inside the battery through the heat generation simulation system 1, the battery may be safely operated based on the heat and temperature inside the battery.

The heat generation simulation system 1 may identify information related to heat inside the battery. Here, the heat-related information may include information on electrochemical reactions, potential distribution, and/or current density distribution inside the battery.

The heat generation simulation system 1 may identify the electrochemical reaction heat in the electrodes and electrolyte inside the battery using an electrochemical model designed for identification of the electrochemical reaction inside the battery. The heat generation simulation system 1 may identify a potential distribution and a current density distribution using a current density identification model. The heat generation simulation system 1 may map the identified electrochemical reaction heat, potential distribution, and current density distribution to a three-dimensional model representing the shape inside the battery.

The heat generation simulation system 1 may include a heat generation simulation device 10, an input device 12, and a display device 14. The input device 12 may be a device for inputting initial values for simulation, and the display device 14 may be a device for displaying the input initial values, a simulation process, and simulation results. In an embodiment, the initial values may include information regarding the battery model (e.g., the electrochemical model), geometric information about components of the battery (e.g., the length and width), information regarding a positive electrode, information regarding a negative electrode, information regarding a separator, and/or information regarding heat (e.g., a specific heat capacity).

The heat generation simulation device 10 may create a database of data including information regarding the battery and charge/discharge conditions through experiments in order to set initial values for identifying electrochemical reactions generated inside the battery and Joule heat based on current flow. Here, the information regarding the battery may include information regarding the type of the battery (e.g., pack type, pouch type, or cylindrical type), materials of components (e.g., a positive electrode, a negative electrode, and/or a separator) constituting the battery, the number and positions of positive or negative electrode tabs, a resistivity value, and the size (e.g., the length and width) of each of the components, and may include experimental data on internal chemical reactions, lithium plating, heat generation, and aging degree based on the pre-obtained electrochemical model of the battery.

The heat generation simulation device 10 may identify an internal chemical reaction using the electrochemical model. The electrochemical model may be software that is modeled to perform computations of heat conduction equations, half-reactions for each of the electrodes, mass transfer reaction equations, the Butler-Volmer equation, and charge conservation equations. The electrochemical model may derive internal chemical reactions using the reaction equations and equations and identify the heat generated accordingly.

The heat generation simulation device 10 may create a database of the aforementioned experimental data in advance to allow the data to be set as initial values, thereby setting a virtual environment that is as close as possible to an environment in which an actual battery is operated. The experimental data described above may be obtained through experiments and stored in the database in an external device or the heat generation simulation device 10. The heat generation simulation device 10 may generate information related to the internal heat of the battery based on the initial values using the data stored in the database during the simulation process.

The heat generation simulation device 10 may include an initial value setting unit 100, a model generation unit 102, a heat flux identification unit 104, and an information generation unit 106. According to the embodiment, the heat generation simulation device 10 may further include a current density identification unit 108 and/or a temperature calculation unit 110. In addition, according to the embodiment, the heat generation simulation device 10 illustrated in FIG. 1 may further include at least one component (e.g., a memory device) other than the components illustrated in FIG. 1.

In FIG. 1, for the purpose of description, it is assumed that the battery is a cylindrical battery and that the cylindrical battery includes an electrode assembly in which a positive electrode, a negative electrode, and a separator are wound in a jellyroll shape, but the battery is not limited thereto.

The initial value setting unit 100 may set the initial values based on information regarding the battery and charge/discharge conditions.

The model generation unit 102 may generate a three-dimensional model of the battery. The model generation unit 102 may generate the three-dimensional model based on an image of the battery. Here, the image of the battery may include a non-destructive computed tomography (CT) image and an X-ray image, and may include an image obtained by actually disassembling the battery and photographing a cross section. In the following description, the image of the battery is assumed to be a CT image.

The model generation unit 102 may generate a three-dimensional model based on the CT image of the battery. The model generation unit 102 may generate the three-dimensional model based on the jellyroll shape of the battery.

The model generation unit 102 may generate a two-dimensional model for each of the positive and negative electrodes of the battery. The model generation unit 102 may generate the two-dimensional model based on information regarding the positive and negative electrodes included in the initial values. Here, information regarding the positive electrode and the negative electrode may include information on the material, length, and height of the positive electrode and negative electrode.

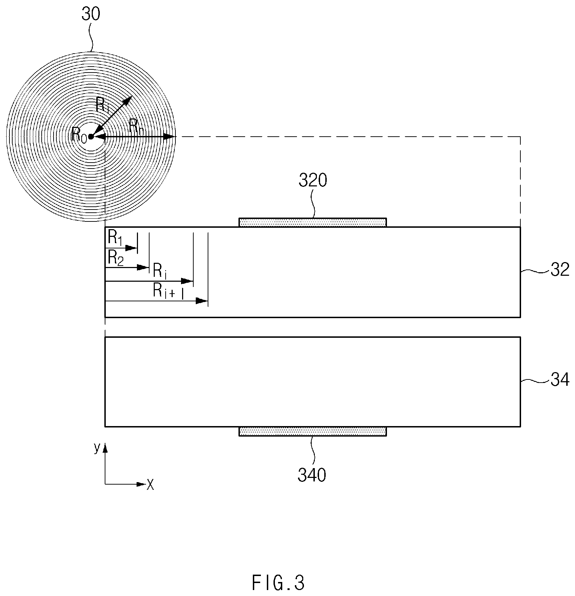

In an embodiment, the model generation unit 102 may map the three-dimensional model and the two-dimensional model. The model generation unit 102 may generate the two-dimensional model corresponding to the three-dimensional model or the three-dimensional model corresponding to the two-dimensional model. The model generation unit 102 may generate the two-dimensional model corresponding to a winding assembly including the positive electrode, the negative electrode, and the separator in their wound state when the assembly is unrolled from the three-dimensional model. The model generation unit 102 may generate the three-dimensional model in which the two-dimensional model is wound into a jellyroll shape. Details on a method of mapping the three-dimensional model and the two-dimensional model are described below in FIG. 3.

The heat flux identification unit 104 may identify an internal heat flux of the battery. The heat flux identification unit 104 may identify the heat flux caused by an electrochemical reaction inside the battery using the electrochemical model based on the initial value.

In an embodiment, the heat flux identification unit 104 may divide the three-dimensional model into sub-models of specified volume units or specified area units. Here, the sub-model may be a three-dimensional structure or a planar structure as a part of the three-dimensional model. The sub-models may be configured to include a positive electrode, a negative electrode, and a separator, and the entire set of sub-models may be the three-dimensional model. In the following description, the sub-model is assumed to be a three-dimensional structure including the positive electrode, the negative electrode, and the separator. The heat flux identification unit 104 may identify a heat flux based on the electrochemical reaction in each of the sub-models. The heat flux identification unit 104 may identify a first heat flux caused by the electrochemical reaction in each of the sub-models based on the initial values (e.g., a charging current, a charging voltage, and the like). Here, the heat flux based on the initial values may be calculated using the electrochemical model or identified through a lookup table constructed using experimental data stored in the database. The electrochemical model may be configured to include a positive electrode, a negative electrode, and a separator, similarly to the sub-model, and may be software that is modeled to obtain values related to internal chemical reactions, exothermic reactions, and material transport by calculating the equations and reaction equations described above.

The information generation unit 106 may generate simulation information related to heat generation of the battery based on the heat flux. The information generation unit 106 may generate first heat flux information based on the first heat flux by the electrochemical reaction in each of the sub-models. Here, the simulation information may include the first heat flux information based on the first heat flux in each of the sub-models, and as will be described below, may further include current density information based on a current density identified in a current collector, second heat flux information based on the current density, heat distribution information obtained by accumulating the first heat flux and a second heat flux, and temperature distribution information.

The current density identification unit 108 may identify the current density of each of the positive and negative electrodes. The current density identification unit 108 may identify the current density of each of positive and negative electrode current collectors based on the initial values (e.g., the charging current and the charging voltage).

In an embodiment, the heat flux identification unit 104 may identify the second heat flux in the current collector based on the current density identified by the current density identification unit 108. The information generation unit 106 may generate the second heat flux information based on the second heat flux. The information generation unit 106 may generate the heat distribution information by accumulating the first heat flux and the second heat flux identified by the heat flux identification unit 104 and mapping the accumulated heat fluxes to the three-dimensional model. Here, the heat distribution information may be mapped to the three-dimensional model by adding the Joule heat caused by the current flowing through the positive electrode and negative electrode current collectors in each of regions corresponding to the three-dimensional model of each sub-model and the heat fluxes caused by the electrochemical reactions within the sub-models, and $q_{tot}$ of each region may be calculated and input to each region of the three-dimensional model.

The temperature calculation unit 110 may calculate the temperature based on the heat flux. The temperature calculation unit 110 may calculate the temperature based on the first heat flux and/or the second heat flux. For example, the temperature calculation unit 110 may calculate a first heat amount of the sub-model based on the first heat flux of the sub-model and the volume or area of the sub-model, and may calculate the temperature based on the first heat amount. In addition, the temperature calculation unit 110 may calculate a second heat amount based on the current density and the initial value of the current collector (e.g., the resistivity value of the positive or negative electrode current collector) and may calculate the temperature based on the second heat amount.

In an embodiment, the temperature calculation unit 110 may calculate the temperature based on the first heat flux and/or the second heat flux based on boundary conditions. Here, boundary conditions may include a condition regarding the outdoor air temperature, a prerequisite that the inside of the jellyroll is an adiabatic wall, and a condition that the temperature continues to rise during charging/discharging of the battery. The information generation unit 106 may further generate the temperature distribution information based on the temperature calculated by the temperature calculation unit 110. The information generation unit 106 may generate the temperature distribution information by mapping the first temperature based on the first heat flux and the second temperature based on the second heat flux to the three-dimensional model. The information generation unit 106 may generate the temperature distribution information based on a heat conduction equation. The heat conduction equation for the information generation unit 106 to generate the temperature distribution information may be expressed by Equation 1.

[Equation 1]

$$(\rho c_p)_{JR} \cdot \frac{\partial T}{\partial t} = \nabla(k\nabla T) + q_{tot}$$

Here, $(\rho c_p)_{jr}$ may refer to the thermal diffusivity for the cylindrical battery in the shape of a jellyroll, $\rho$ may refer to the density of the battery, and $c_p$ may refer to specific heat capacity of the battery. $\frac{\partial T}{\partial t}$ is the self-heating ratio, k is thermal conductivity, and $q_{tot}$ may refer to the total heat flux. Here, $q_{tot}$ may be expressed by Equation 2.

[Equation 2]

$$q_{tot} = x_{jr} \cdot q_{jr} + x_{ccp} \cdot q_{ccp} + x_{ccn} \cdot q_{ccn}$$

Here, $q_{jr}$, $q_{ccp}$, and $q_{ccn}$ may be the heat flux in the sub-model, the heat flux per unit volume of the positive electrode current collector, and the heat flux per unit volume of the negative electrode current collector, respectively. $x_{jr}$, $x_{ccp}$, and $x_{ccn}$ may be the volume of the sub-model, the unit volume of the positive electrode current collector, and the unit volume of the negative electrode current collector, respectively. $q_{jr}$, $q_{ccp}$, and $q_{ccn}$ may be expressed by Equations 3 to 5, respectively.

[Equation 3]

$$q_{jr} = i_s\nabla\varphi_s + i_l\nabla\varphi_i + aFj_{+n}(\varphi_s - \varphi_i - U(c_s) + T\frac{\partial U}{\partial T})$$

Here, $\varphi$, $U(c_s)$, and $T\frac{\partial U}{\partial T}$ may represent the potential, the open circuit potential (OCP), and the Peltier heating, respectively.

[Equation 4]

$$q_{ccp} = i_{ccp}\nabla\varphi_{ccp}$$

Here, $q_{ccp}$, $i_{ccp}$, and $\varphi_{ccp}$ may refer to the heat flux, current, and potential in the positive electrode current collector, respectively.

[Equation 5]

$$q_{ccn} = i_{ccn}\nabla\varphi_{ccn}$$

Here, $q_{ccn}$, $i_{ccn}$, and $\varphi_{ccn}$ may refer to the heat flux, current, and potential in the negative electrode current collector, respectively.

The information generation unit 106 may generate the temperature distribution information based on the calculated temperature. The information generation unit 106 may generate the temperature distribution information by mapping the generated temperature to the three-dimensional model.

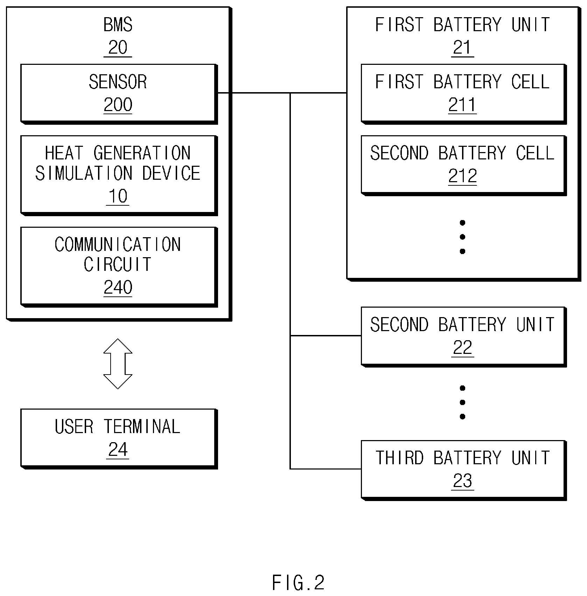

FIG. 2 is a block diagram of the heat generation simulation device included in a battery management system (BMS) according to an embodiment disclosed herein.

Referring to FIG. 2, a BMS 20 may be connected to the battery units 21, 22, and 23 and a user terminal 24 via wires and/or wirelessly. Here, each of the battery units 21, 22, and 23 may be a battery module, a battery pack, or a battery rack and may include one or more battery cells 211 and 212. According to the embodiment, the battery cells 211 and 212 may be a lithium-ion (Li-ion) battery, a lithium-ion polymer (Li-ion polymer) battery, a nickel-cadmium (Ni-Cd) battery, a nickel-metal hydride (Ni-MH) battery, a lithium iron phosphate (LFP) battery, a nickel-cobalt-manganese (NCM) battery, and the like, but are not limited thereto. In addition, in FIG. 2, only the description of the battery cells 211 and 212 included in a first battery unit 21 are provided, but this is only for convenience of description, and a second battery unit 22 and a third battery unit 23 may also include a plurality of battery cells.

In an embodiment, the connection between the BMS 20 and the user terminal 24 may be a communication connection through the wired and/or wireless network.

In an embodiment, the BMS 20 and the battery units 21, 22, and 23 may be included in an electronic device. The electronic device may be a mobile device (e.g., a mobile phone, a laptop computer, a smartphone, or a smart pad), an electric vehicle (e.g., an electric vehicle (EV), a hybrid EV (HEV), a plug-in HEV (PHEV), a fuel cell EV (FCEV)), an energy storage system (ESS), or a battery swapping system (BSS).

In an embodiment, the user terminal 24 may be a device that monitors the simulation process and results by the operations of the heat generation simulation device 10, and may be a mobile device (e.g., a mobile phone, a laptop computer, a smartphone, a smart pad), or a personal computer (PC).

Referring to FIG. 2, the BMS 20 may include a sensor 200, the heat generation simulation device 10, and a communication circuit 240. According to the embodiment, the BMS 20 illustrated in FIG. 2 may further include at least one component (e.g., a display, an input device, or an output device) other than the components illustrated in FIG. 2. According to an embodiment, the heat generation simulation device 10 may be a processor including an algorithm for diagnosing heat distribution, and the operations performed in the heat generation simulation device 10 may be one part in the diagnostic algorithm performed by a processor (not shown) of the BMS 20.

The sensor 200 may acquire values related to states of the battery units 21, 22, and 23. In an embodiment, the state-related values may indicate one or more values for voltage, current, resistance, state of charge (SOC), state of health (SOH), or temperature of the battery units 21, 22, and 23, or a combination thereof. Hereinafter, values related to states may be referred to as "state values."

The heat generation simulation device 10 may generate heat flux information, current density information, heat amount information, temperature information, or a combination thereof based on the state values of battery units 21, 22, and 23 acquired through the sensor 200. Here, the heat generation simulation device 10 may generate heat flux information, current density information, heat amount information, temperature information, or a combination thereof based on the state values of actual battery units 21, 22, and 23 rather than simulation. In this case, the heat generation simulation device 10 may generate the aforementioned items of information based on the state values acquired by the sensor 200, instead of arbitrarily setting information regarding the battery by the initial value setting unit 100 in FIG. 1.

The communication circuit 240 may transmit the aforementioned items of information generated by the heat generation simulation device 10 to the user terminal 24.

In an embodiment, the communication circuit 240 may establish a wired communication channel and/or a wireless communication channel between the heat generation simulation device 10 and the user terminal 24, and may transmit and receive data to and from the heat generation simulation device 10 and/or the user terminal 24 through the established communication channel. For example, the communication circuit 240 may transmit the aforementioned items of information to the user terminal 24.

FIG. 3 illustrates a two-dimensional model of positive and negative electrodes of a cylindrical battery according to an embodiment disclosed herein.

Referring to FIG. 3, the heat generation simulation device 10 may generate a two-dimensional model 32 for the positive electrode and a two-dimensional model 34 for the negative electrode based on information regarding the positive and negative electrodes of the battery included in the initial values. Here, the information regarding the positive and negative electrodes may include the length and height of the positive and negative electrode current collectors, and a position of a positive tab 320 and a position of a negative tab 340.

In an embodiment, the heat generation simulation device 10 may map a three-dimensional model 30 and two-dimensional models 32 and 34 of the positive and negative electrode current collectors. The heat generation simulation device 10 may generate the two-dimensional models 32 and 34 corresponding to the three-dimensional model 30. The heat generation simulation device 10 may generate the two-dimensional models 32 and 34 based on an upper part of the three-dimensional model 30. Referring to the three-dimensional model 30, a winding assembly including a positive electrode, a negative electrode, and a separator may be wound in a jellyroll shape n times, and the number of winding turns may include a first turn to an n-th turn based on a radius from an origin $R_0$. Here, for the purpose of description, it is assumed that the radii corresponding to the first to n-th turns are a first radius $R_1$ to an n-th radius $R_n$, respectively.

In an embodiment, the heat generation simulation device 10 may map the three-dimensional model 30 and the two-dimensional models 32 and 34 based on an Archimedean spiral trajectory. Here, the Archimedean spiral trajectory may be expressed by Equation 6.

[Equation 6]

$$\mathrm{SPL(n)} = \int_0^{2n\pi} \sqrt{(R_i + b\theta)^2 + b^2} \cdot d\theta$$

Referring to Equation 6, $R_i$ and $b\theta$ may refer to the polar coordinate components of a point corresponding to an i-th turn, n may refer to the number of winding turns, and $L_t$ may denote the total length of a single cell.

The components (x-axis and y-axis) of the coordinate system of the two-dimensional model 32 for the positive electrode and the two-dimensional model 34 for the negative electrode may correspond to the length and height of the winding assembly, the positive electrode current collector, or the negative electrode current collector. For the x-axis of the two-dimensional models 32 and 34, the length corresponding to the radius of the three-dimensional model 30 may be mapped. For example, the lengths corresponding to the first radius $R_1$ to the n-th radius $R_n$ of the three-dimensional model 30 may be mapped to the x-axis of the two-dimensional models 32 and 34 for the positive electrode. By mapping the three-dimensional model 30 and the two-dimensional models 32 and 34 or generating the two-dimensional models 32 and 34 corresponding to the three-dimensional model 30 based on the above-described method, the current density mapped to the two-dimensional models 32 and 34 and the second heat amount based on the current density may be mapped to the three-dimensional model 30. The height of the positive electrode current collector corresponding to the y-axis of the two-dimensional models 32 and 34 may be the same as the height corresponding to the y-axis of the three-dimensional model.

In the above, the description has been given on the premise that the two-dimensional model 32 for the positive electrode and the two-dimensional model 34 for the negative electrode are distinguished from each other, but the present embodiment is not limited thereto, and a two-dimensional model for the winding assembly including the positive and negative electrodes may also be generated or mapped to the three-dimensional model 30 according to the above-described method.

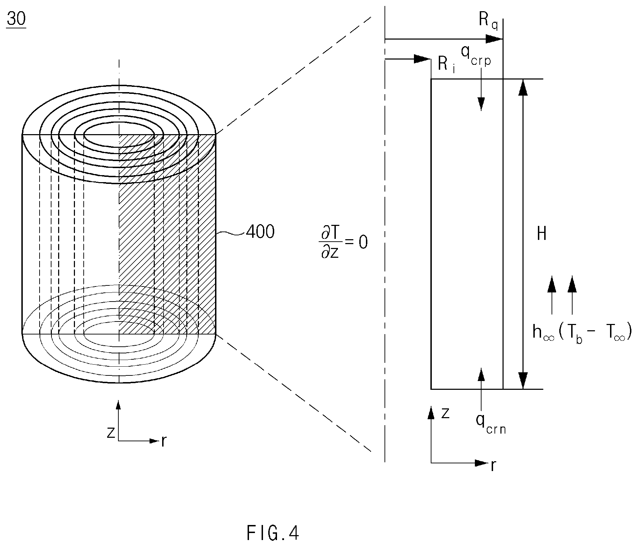

FIG. 4 illustrates an example of adiabatic conditions applied to a three-dimensional model of the cylindrical battery according to an embodiment disclosed herein.

Referring to FIG. 4, any point included in the three-dimensional model 30 may be expressed as coordinates based on the axes (the r-axis and z-axis) based on the radius depending on the number of winding turns and the height of the cylindrical battery.

One cross section 400 of the three-dimensional model 30 may be expressed based on the i-th radius $R_i$ depending on the number of winding turns and the height H in winding assembly. $q_{crp}$ may refer to a boundary condition of an upper portion of the jellyroll shape, and $q_{crn}$ may refer to a boundary condition of a lower portion of the jellyroll shape. $T_b$ may be a boundary temperature (e.g., the outdoor air temperature), and $T_k$ may refer to the outer temperature of the jellyroll shape per unit height. Heat distribution information and/or temperature distribution information inside the battery may be generated based on the boundary conditions.

The heat generation simulation device 10 may input the first heat flux of the sub-model corresponding to the one cross section 400 and the second heat flux of the current collector corresponding to the one cross section 400. The heat generation simulation device 10 may generate heat flux information and the heat distribution information for the one cross section 400, and may generate the temperature distribution information based on the information.

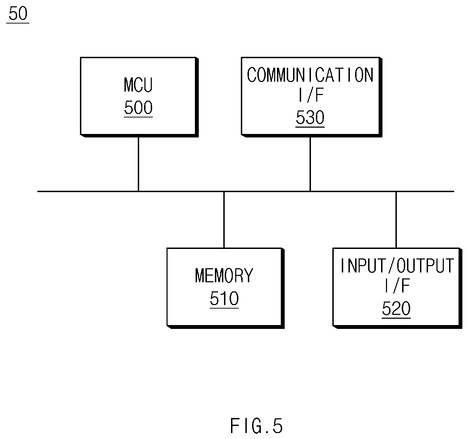

FIG. 5 illustrates a computing system that executes the operation of the heat generation simulation device according to an embodiment disclosed herein.

Referring to FIG. 5, a computing system 50 of the heat generation simulation device 10 according to an embodiment disclosed herein may include a microcontroller unit (MCU) 500, a memory 510, an input/output interface (I/F) 520, and a communication I/F 530.

The MCU 500 may be a processor that executes various programs (e.g., a battery diagnosis program) stored in the memory 510, processes various data from the programs, and performs functions of the heat generation simulation device 10 shown in FIGS. 1 to 5 described above.

The memory 510 may store various programs related to the operation of the heat generation simulation device 10. In addition, the memory 510 may store operating data of the heat generation simulation device 10.

A plurality of memories 510 may be provided as needed. The memory 510 may be a volatile memory or non-volatile memory. As the volatile memory, the memory 510 may be a random access memory (RAM), dynamic RAM (DRAM), static RAM (SRAM), or the like. As the non-volatile memory, for the memory 510, a read-only memory (ROM), a programmable ROM (PROM), an electrically alterable ROM (EAROM), an erasable programmable ROM (EPROM), an electrically erasable programmable ROM (EEPROM), a flash memory, or the like may be used. The examples of memories 510 listed above are only exemplary and are not limited to the examples.

The input/output I/F 520 may provide an interface that connects an input device such as a keyboard, a mouse, a touch panel, or the like, and an output device such as a display, to the MCU 500 to enable data transmission and reception.

The communication I/F 530 is a component that may transmit and receive various data to and from the server, and may be any device that may support wired or wireless communication. For example, a program for resistance measurement and abnormal diagnosis or various data may be transmitted to and received from a separately provided external server through the communication I/F 530.

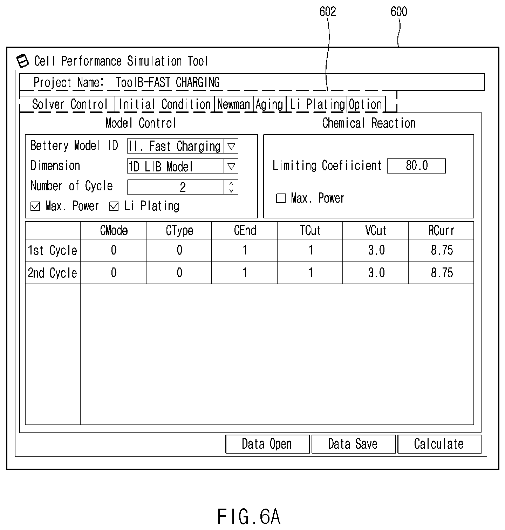

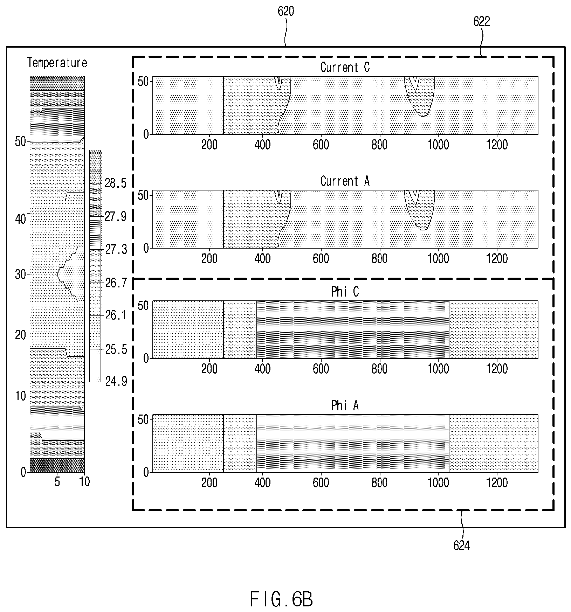

FIGS. 6a and 6b illustrate a graphical user interface (GUI) implemented by the computing system that executes the operation of the heat generation simulation device according to an embodiment disclosed herein.

Referring to FIGS. 6a and 6b, an initial value input screen 600 and a simulation result screen 620 may be output through the computing system 50 disclosed in FIG. 5.

Referring to the initial value input screen 600, there are a plurality of input fields 602 related to initial values. The plurality of input fields 602 may include a field for inputting information related to the battery model and chemical reaction to be used (solver control), a field for inputting information related to the initial simulation value (initial condition), a field for inputting information related to the battery composition material (Newman), a field for inputting aging information (aging), and a field for inputting lithium plating information (Li plating). Here, data based on experimental data stored in the database may be input into the plurality of input fields 602 through input/output I/F 520.

The MCU 500 may perform a simulation of heat generation inside the battery based on the initial values, and the simulation result may be output on the simulation result screen 620 through the input/output I/F 520. Here, the simulation result screen 620 may include current density information 622 based on the current flowing through each of the positive and negative electrode current collectors, and second heat flux information 624 based on the current density information 622.

Referring to the current density information 622, the intensity and distribution of the current density at the positive or negative electrode of the battery may be included. A region where the positive tab or negative tab is located may be confirmed based on the fact that the current may flow through the positive electrode current collector or negative electrode current collector and ultimately flows toward the positive tab or negative tab.

The second heat flux information 624 may include the intensity and distribution of the heat flux based on the current density. Referring to the second heat flux information 624, a region with the highest heat flux intensity may be confirmed based on the length and height of the positive electrode or negative electrode.

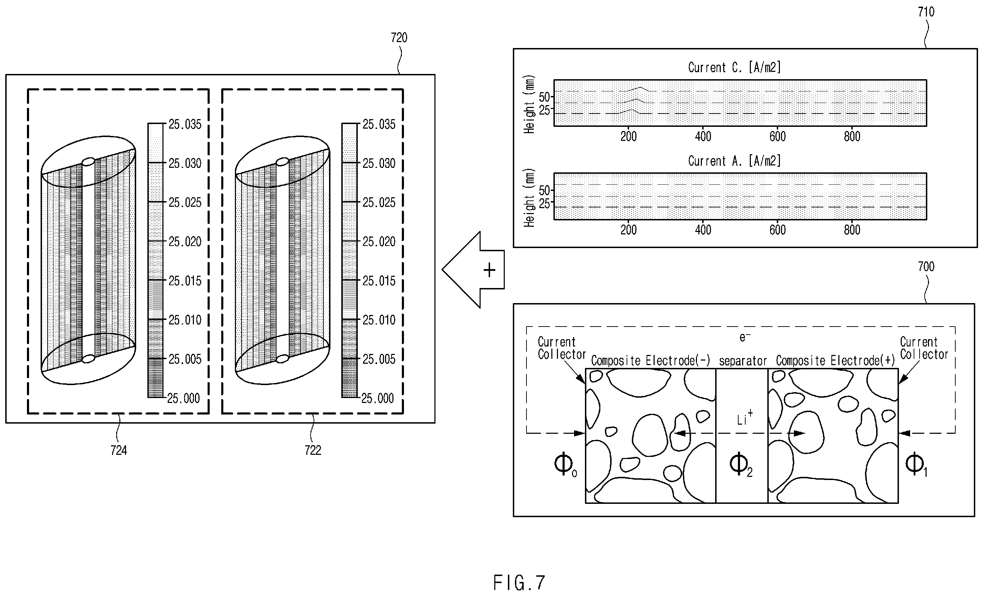

FIG. 7 illustrates temperature distribution information based on simulation results by the computing system according to an embodiment disclosed herein.

Referring to FIG. 7, the heat generation simulation device 10 may generate current density information 710. The heat generation simulation device 10 may generate first heat flux information based on an electrochemical model 700. The heat generation simulation device 10 may generate second heat flux information based on the current density information 710, and may input the first heat flux information and the second heat flux information into the three-dimensional model 30 (see FIGS. 3 and 4) to generate heat distribution information 722.

The heat generation simulation device 10 may generate temperature distribution information 724 based on the heat distribution information 722. The heat generation simulation device 10 may generate the heat distribution information 722 and the temperature distribution information 724 by inputting the second heat flux calculated based on the first heat flux and the current density of each sub-model into the three-dimensional model. The heat distribution information 722 and the temperature distribution information 724 may be dynamic information in which heat conduction over time is reflected.

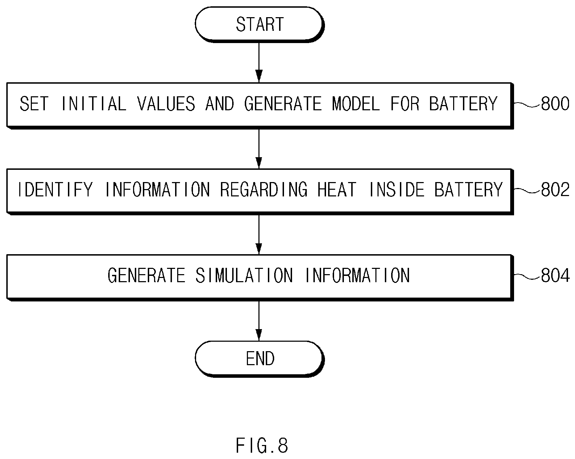

FIG. 8 is a flowchart showing a method of operating the heat generation simulation device according to an embodiment disclosed herein.

Referring to FIG. 8, in operation 800, the heat generation simulation device 10 may set initial values for simulation. Here, the initial values may include information regarding the battery and charge/discharge information described in FIG. 1.

The heat generation simulation device 10 may generate a model for the battery. The heat generation simulation device 10 may generate a three-dimensional model of the battery. The heat generation simulation device 10 may generate the three-dimensional model based on a CT image of the battery. The heat generation simulation device 10 may generate the three-dimensional model based on the jellyroll shape of the battery.

The heat generation simulation device 10 may generate a two-dimensional model for each of positive and negative electrodes of the battery. The heat generation simulation device 10 may generate the two-dimensional model based on information regarding the positive electrode and negative electrode included in the initial values.

In an embodiment, the heat generation simulation device 10 may map the three-dimensional model and the two-dimensional model. The heat generation simulation device 10 may generate the two-dimensional model corresponding to the three-dimensional model or generate the three-dimensional model corresponding to the two-dimensional model. The heat generation simulation device 10 may generate the two-dimensional model corresponding to a winding assembly including the positive electrode, the negative electrode, and the separator in their wound state when the assembly is unrolled from the three-dimensional model.

In operation 802, the heat generation simulation device 10 may identify information regarding heat inside the battery. The heat generation simulation device 10 may identify a heat flux inside the battery. The heat generation simulation device 10 may identify an internal heat flux of the battery. The heat generation simulation device 10 may identify the internal heat flux of the battery using an electrochemical model based on the initial values.

In an embodiment, the heat generation simulation device 10 may divide the three-dimensional model into sub-models of specified volume units or specified area units. The heat generation simulation device 10 may identify a first heat flux based on an electrochemical reaction in each of the sub-models. The heat generation simulation device 10 may identify the first heat flux caused by the electrochemical reaction in each of the sub-models based on the initial values (e.g., charging current and charging voltage).

In an embodiment, the heat generation simulation device 10 may identify a potential distribution and/or current density of each of the positive electrode and negative electrode. The heat generation simulation device 10 may identify the current density of each of the positive and negative electrode current collectors based on the initial values (e.g., charging current and charging voltage). The heat generation simulation device 10 may identify a second heat flux in the current collector based on the identified current density.

In an embodiment, the heat generation simulation device 10 may calculate a temperature based on the heat flux. The heat generation simulation device 10 may calculate the temperature based on the first heat flux and/or the second heat flux. The heat generation simulation device 10 may calculate the temperature according to the first heat flux and/or the second heat flux based on boundary conditions.

In operation 804, the heat generation simulation device 10 may generate simulation information. The heat generation simulation device 10 may generate the simulation information based on the identified heat flux, potential distribution, current density, and/or temperature distribution.

In an embodiment, the heat generation simulation device 10 may generate first heat flux information based on the first heat flux caused by the electrochemical reaction in each of the sub-models.

In an embodiment, the heat generation simulation device 10 may generate current density information based on the current density.

In an embodiment, the heat generation simulation device 10 may generate second heat flux information regarding the second heat flux based on the current density.

In an embodiment, the heat generation simulation device 10 may generate the heat distribution information by adding the first heat flux and the second heat flux and mapping the resulting heat flux to the three-dimensional model.

In an embodiment, the heat generation simulation device 10 may generate temperature distribution information based on the calculated temperature. The heat generation simulation device 10 may generate the temperature distribution information by mapping the calculated temperature to the three-dimensional model.

Terms such as "include," "comprise," or "have" described above mean that the corresponding component can be present unless otherwise stated, and thus it should be construed that other components may be further included rather than excluding other components. All terms including technical or scientific terms have the same meaning as commonly understood by those of ordinary skill in the art to which embodiments disclosed herein belong, unless otherwise defined. Terms commonly used such as those defined in dictionaries should be interpreted as having a meaning that is consistent with their meaning in the context of the related art and will not be interpreted in an idealized or overly formal sense unless expressly so defined herein.

The above description is merely an example of the technical idea disclosed herein, and those with ordinary skill in the art to which the embodiments disclosed herein belong may make various modifications and variations without departing from the essential characteristics of the embodiments disclosed herein. Accordingly, the embodiments disclosed herein are not intended to limit the technical ideas of the embodiments disclosed herein but rather to explain them, and the scope of the technical ideas disclosed herein is not limited by these embodiments. The scope of protection disclosed herein should be interpreted by the accompanying claims, and all technical ideas within the scope equivalent thereto should be construed as being included in the scope of rights herein.

**Claims**

1. A heat generation simulation device comprising:

   an initial value setting unit configured to set an initial value including information regarding a battery and charge/discharge information;
   a model generation unit configured to generate a three-dimensional model of the battery;
   a heat flux identification unit configured to identify an internal heat flux of the battery using an electrochemical model based on the initial value; and
   an information generation unit configured to generate simulation information related to heat generation of the battery based on the heat flux.

2. The heat generation simulation device of claim 1, wherein the heat flux identification unit divides the three-dimensional model into sub-models of specified volume units and identifies a first heat flux in each of the sub-models.

3. The heat generation simulation device of claim 2, wherein the information generation unit generates first heat flux information by mapping the first heat flux in each of the sub-models to the three-dimensional model.

4. The heat generation simulation device of claim 1, further comprising a current density identification unit configured to identify a current density in a current collector of the battery,
wherein the information generation unit generates current density information based on the current density.

5. The heat generation simulation device of claim 4, wherein the heat flux identification unit identifies a second heat flux in the current collector based on the current density.

6. The heat generation simulation device of claim 5, wherein the information generation unit generates second heat flux information by mapping the second heat flux in the current collector to the three-dimensional model.

7. The heat generation simulation device of claim 1, wherein the information generation unit generates heat distribution information inside the battery based on the heat flux.

8. The heat generation simulation device of claim 7, further comprising a temperature calculation unit configured to calculate a temperature based on the heat flux,
wherein the information generation unit generates temperature distribution information by mapping the temperature to the three-dimensional model.

9. The heat generation simulation device of claim 1, wherein the model generation unit maps a two-dimensional model based on an internal shape of the battery and the three-dimensional model based on an Archimedean spiral trajectory.

10. An operating method for a heat generation simulation device, comprising:

setting an initial value including information regarding a battery and charge/discharge information;
generating a three-dimensional model of the battery;
identifying an internal heat flux of the battery using an electrochemical model based on the initial value; and
generating simulation information related to heat generation of the battery based on the heat flux.

11. The operating method of claim 10, wherein the identifying of the heat flux includes:

dividing the three-dimensional model into sub-models of specified volume units; and
identifying a first heat flux in each of the sub-models.

12. The operating method of claim 11, wherein the generating of the information includes generating first heat flux information by mapping the first heat flux in each of the sub-models to the three-dimensional model.

13. The operating method of claim 10, further comprising identifying a current density in a current collector of the battery, wherein the generating of the information includes generating current density information based on the current density.

14. The operating method of claim 13, wherein the identifying of the heat flux includes identifying a second heat flux in the current collector based on the current density.

15. The operating method of claim 14, wherein the generating of the information includes generating second heat flux information by mapping the second heat flux in the current collector to the three-dimensional model.

16. The operating method of claim 10, wherein the generating of the information includes generating heat distribution information inside the battery based on the heat flux.

17. The operating method of claim 16, further comprising calculating a temperature based on the heat flux,
wherein the generating of the information includes generating temperature distribution information by mapping the temperature to the three-dimensional model.

18. The operating method of claim 10, wherein the generating of the model includes mapping a two-dimensional model based on an internal shape of the battery and the three-dimensional model based on an Archimedean spiral trajectory.

1

INPUT DEVICE
12

HEAT GENERATION
SIMULATION DEVICE
10

DISPLAY DEVICE
14

INITIAL VALUE
SETTING UNIT
100

MODEL
GENERATION UNIT
102

HEAT FLUX
IDENTIFICATION UNIT
104

INFORMATION
GENERATION UNIT
106

CURRENT DENSITY
IDENTIFICATION UNIT
108

TEMPERATURE
CALCULATION UNIT
110

FIG.1

FIG.2

30

R₀  R_i  R_n

320

R₁
R₂  R_i
R_{i+1}

32

34

340

y
x

FIG.3

$$\frac{\partial T}{\partial z} = 0$$

FIG.4

50

MCU
500

COMMUNICATION
I/F
530

MEMORY
510

INPUT/OUTPUT
I/F
520

FIG.5

602    600

Cell Performance Simulation Tool

Project Name: ToolB-FAST CHARGING

| Solver Control | Initial Condition | Newman | Aging | Li Plating | Option |

Model Control                    Chemical Reaction

Bettery Model ID  [II. Fast Charging ▽]        Limiting Coefiicient [ 80.0 ]

Dimension         [1D LIB Model        ▽]

Number of Cycle   [         2        ] ▲▽      ☐ Max. Power

☑ Max. Power  ☑ Li Plating

|  | CMode | CType | CEnd | TCut | VCut | RCurr |
|---|---|---|---|---|---|---|
| 1st Cycle | 0 | 0 | 1 | 1 | 3.0 | 8.75 |
| 2nd Cycle | 0 | 0 | 1 | 1 | 3.0 | 8.75 |

| Data Open | Data Save | Calculate |

FIG.6A

FIG.6B

FIG.7

```
              ┌──────────────┐
              │    START     │
              └──────┬───────┘
                     │
                     ▼
┌─────────────────────────────────────────────────┐
│ SET INITIAL VALUES AND GENERATE MODEL FOR BATTERY│───800
└─────────────────────┬───────────────────────────┘
                      │
                      ▼
┌─────────────────────────────────────────────────┐
│ IDENTIFY INFORMATION REGARDING HEAT INSIDE BATTERY│──802
└─────────────────────┬───────────────────────────┘
                      │
                      ▼
┌─────────────────────────────────────────────────┐
│        GENERATE SIMULATION INFORMATION          │───804
└─────────────────────┬───────────────────────────┘
                      │
                      ▼
              ┌──────────────┐
              │     END      │
              └──────────────┘
```

FIG.8

# EP 4 764 933 A1

## INTERNATIONAL SEARCH REPORT

| | International application No. |
|---|---|
| | **PCT/KR2025/005344** |

**A. CLASSIFICATION OF SUBJECT MATTER**

**G06F 30/20**(2020.01)i; **G01R 31/385**(2019.01)i; **G01R 19/08**(2006.01)i; **G06F 119/08**(2020.01)i

According to International Patent Classification (IPC) or to both national classification and IPC

**B. FIELDS SEARCHED**

Minimum documentation searched (classification system followed by classification symbols)

G06F 30/20(2020.01); G01R 31/36(2006.01); G06F 119/08(2020.01); G06F 17/50(2006.01); G06F 30/23(2020.01); G16C 20/70(2019.01); H01M 10/48(2006.01); H01M 6/36(2006.01); H01M 6/50(2006.01); H02J 7/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 시뮬레이션(simulation), 3차원(three-dimension), 열 유속(heat flux), 온도(temperature)

**C. DOCUMENTS CONSIDERED TO BE RELEVANT**

| Category* | Citation of document, with indication, where appropriate, of the relevant passages | Relevant to claim No. |
|---|---|---|
| Y | US 6016047 A (PETRUS H.L. NOTTEN et al.) 18 January 2000 (2000-01-18) column 1, lines 16-20; column 3, lines 35-44; column 6, lines 17, 28-39; and column 25, lines 27-32 | 1-4,7-13,16-18 |
| A | | 5,6,14,15 |
| Y | WO 2020-189730 A1 (GS YUASA INTERNATIONAL LTD.) 24 September 2020 (2020-09-24) paragraphs [0009], [0026], [0038], [0151] | 1-4,7-13,16-18 |
| Y | JP 6001823 B2 (TOYOTA CENTRAL R&D LABS., INC.) 05 October 2016 (2016-10-05) paragraphs [0112], [0114] | 9,18 |
| A | KR 10-2022-0038789 A (TWAICE TECHNOLOGIES GMBH) 29 March 2022 (2022-03-29) paragraphs [0019]-[0150] | 1-18 |
| A | CN 110110358 A (BEIHANG UNIVERSITY) 09 August 2019 (2019-08-09) paragraphs [0030]-[0074] | 1-18 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **24 July 2025** | **24 July 2025** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

23

## INTERNATIONAL SEARCH REPORT
### Information on patent family members

International application No.

**PCT/KR2025/005344**

| Patent document cited in search report | | | Publication date (day/month/year) | Patent family member(s) | | | Publication date (day/month/year) |
|---|---|---|---|---|---|---|---|
| US | 6016047 | A | 18 January 2000 | EP | 0880710 | A2 | 02 December 1998 |
| | | | | JP | 2000-504477 | A | 11 April 2000 |
| | | | | WO | 98-22830 | A2 | 28 May 1998 |
| WO | 2020-189730 | A1 | 24 September 2020 | EP | 3944121 | A1 | 26 January 2022 |
| | | | | JP | 7501519 | B2 | 18 June 2024 |
| | | | | US | 12271664 | B2 | 08 April 2025 |
| | | | | US | 2022-0188479 | A1 | 16 June 2022 |
| | | | | WO | 2020-189730 | A1 | 24 September 2020 |
| JP | 6001823 | B2 | 05 October 2016 | JP | 2012-154665 | A | 16 August 2012 |
| KR | 10-2022-0038789 | A | 29 March 2022 | CN | 114245898 | A | 25 March 2022 |
| | | | | DE | 102019121461 | B3 | 24 December 2020 |
| | | | | EP | 4010837 | A1 | 15 June 2022 |
| | | | | JP | 2022-543322 | A | 11 October 2022 |
| | | | | JP | 7255020 | B2 | 10 April 2023 |
| | | | | KR | 10-2708340 | B1 | 23 September 2024 |
| | | | | US | 2022-0374568 | A1 | 24 November 2022 |
| | | | | WO | 2021-023346 | A1 | 11 February 2021 |
| CN | 110110358 | A | 09 August 2019 | CN | 110110358 | B | 04 December 2020 |

Form PCT/ISA/210 (patent family annex) (July 2022)

24

REFERENCES CITED IN THE DESCRIPTION

**Patent documents cited in the description**

- KR 1020240053355